# EUROPÄISCHE PATENTANMELDUNG

(11) **EP 4 684 630 A1**
(43) Veröffentlichungstag der Anmeldung: **28.01.2026**
(21) Anmeldenummer: 25191485.9
(22) Anmeldetag: 24.07.2025
(51) Int. Cl.: A01D 61/02

(54) **LANDWIRTSCHAFTLICHE ERNTEMASCHINE**

(30) Priorität: 25.07.2024 DE 102024121218
(71) Anmelder: Pöttinger Landtechnik GmbH, 4710 Grieskirchen (AT)
(72) Erfinder: BALDINGER, Markus, 4710 Grieskirchen (AT); JUNGREITHMAYER, Martin, 4710 Grieskirchen (AT); MAIR, Andreas, 4710 Grieskirchen (AT); ANGLEITNER, Norbert, 4710 Grieskirchen (AT)
(74) Vertreter: Lorenz Seidler Gossel Part. mbB

(57) **Zusammenfassung**

Die vorliegende Erfindung betrifft eine landwirtschaftliche Erntemaschine mit zumindest einer Mergereinheit, die einen Aufsammelförderer zum Aufsammeln von Erntegut vom Boden sowie einen Querförderer mit einer liegenden Förderbahn zum Querfördern des aufgesammelten Ernteguts quer zur Fahrtrichtung aufweist, wobei in zumindest einem Randabschnitt des Querförderers oberhalb von dessen Förderbahn ein Hilfsförderer zum Abfördern von Erntegutansammlungen auf der Förderbahn und/oder zum Reinigen der Förderbahn des Querförderers vorgesehen ist, wobei der Hilfsförderer einen Stachel- und/oder Bürstenrotor mit um eine Umlaufachse umlaufenden Förderzinken und/oder -borsten aufweist.

## Beschreibung

Die vorliegende Erfindung betrifft eine landwirtschaftliche Erntemaschine mit zumindest einer Mergereinheit, die einen Aufsammelförderer zum Aufsammeln von Erntegut vom Boden sowie einen Querförderer mit einer liegenden Förderbahn zum Querfördern des aufgesammelten Ernteguts quer zur Fahrtrichtung aufweist, wobei in zumindest einem Randabschnitt des Querförderers oberhalb von dessen Förderbahn ein Hilfsförderer zum Abfördern von Erntegutansammlungen auf der Förderbahn und/oder Reinigen der Förderbahn des Querförderers vorgesehen ist.

Bei Mergern kommt es in den Randbereichen der Förderbahn des Öfteren zu ungewollten Erntegutansammlungen, wenn der Querförderer das auf seine Förderbahn aufgeladene Erntegut nicht mehr schnell genug bzw. vollständig abfördern kann, was insbesondere im stromaufseitigen End- bzw. Randabschnitt des Mergers passieren kann. In weiter stromabseitigen Abschnitten bzw. am abwurfseitigen Endabschnitt wird das dort befindlichen Erntegut, zusätzlich zur Förderwirkung des dortigen Bandabschnitts selbst, auch noch durch das nachlaufende, noch weiter stromauf befindliche Erntegut "angeschoben", während im stromaufseitigen End- bzw. Randabschnitt diese zusätzliche Anschubwirkung mangels noch weiter stromauf befindlichem Erntegut ausfällt und der Querförderer selbst zu wenig Grip entwickelt, um Erntegutansammlungen alleine abfördern zu können.

Solche Merger haben als Querförderer regelmäßig endlos umlaufende Förderbänder oder ggf. auch mehrere nebeneinander angeordnete Förderelemente wie Riemen, die im Umlenkbereich und an den längsseitigen Rändern von gebogenen Schutzblechen abgedeckt sein können. Damit das aufgegebene Erntegut nicht heckseitig von der Förderbahn herunterfällt, sind dort oft auch aufrechte Begrenzungsbleche oder - wände vorgesehen, die in den genannten Randbereichen des Querförderers ggf. auch abgerundet sein können. An den Randbereichen der besagten Abdeck- bzw. Begrenzungsbleche neigt das Erntegut zum Verheddern, sodass sich in den besagten Randbereichen der Querförderer ungewollte Erntegutansammlungen aufbauen können, die der Querförderer alleine nicht mehr abzufördern schafft.

Die genannten Erntegutansammlungen drohen insbesondere bei längerem Schnittgut oder auch bei Erntegut, das vor dem Aufsammeln von einem Zetter bearbeitet wurde, was oft zu Verflechtungen des halmförmigen Ernteguts führt.

Um den Querförderer vor solchen ungewünschten Erntegutansammlungen in den Randbereichen zu bewahren bzw. den Querförderer wieder zu reinigen, wenn sich Erntegut aufbaut, wurden bereits verschiedene Reinigungsmaßnahmen mit zusätzlichen Hilfsförderern vorgeschlagen. Beispielsweise zeigt die Schrift EP 2 839 732 A1 einen Merger der eingangs genannten Art, bei dem als Hilfsförderer zur Reinigung des Querförderbands ein gummibereiftes Rad vorgesehen ist, das an der heckseitigen Prallwand mit in Fahrtrichtung weisender Drehachse montiert und leicht oberhalb des Querförderbands angeordnet ist, sodass zwischen der Bereifung des Rads und dem Querförderband ein Förderspalt verbleibt, durch den das Erntegut hindurchgefördert werden und hierdurch das Querförderband gereinigt werden kann. Ein solches gummibereiftes Reinigungsrad besitzt jedoch nur eine begrenzte Förderwirkung, auch wenn es angetrieben wird, und ist hinsichtlich seiner Höhe über dem Querförderband schwierig zu positionieren. Wird das Reinigungsrad zu dicht über dem Querförderband montiert, wird der Förderspalt sehr klein, sodass größere Erntegutmengen nicht mehr verlässlich abgefördert werden können. Wird andererseits das Reinigungsrad zu hoch über dem Querförderer montiert, leidet die Förderwirkung, sodass sich wiederum Verstopfungen ergeben können.

Die Schrift DE 10 2021 125 408 A1 schlägt als Hilfsförderer in den Randbereichen des Querförderbands aufrechtstehende Hilfsförderbänder vor, die vor der heckseitigen Prallwand angeordnet sind bzw. einen randseitigen Teilabschnitt der besagten Prallwand bilden. Solche an der heckseitigen Prallwand stehende Zusatzförderbänder sind jedoch nicht nur konstruktiv aufwendig in die genannte Prallwand zu integrieren, sondern haben auch nur eine begrenzte Förderwirkung in Bezug auf Verstopfungen, die sich in Fahrtrichtung weiter vorne auf dem Querförderer aufbauen, beispielsweise durch die randseitigen Schutzbleche, die das Querförderband einfassen und an denen sich langhalmiges Erntegut verheddern kann.

Die Schrift EP 3 278 656 A1 versucht das Problem ungewollter Erntegutansammlungen direkt am Querförderband selbst zu lösen, indem auf dem Querförderband Mitnehmerleisten montiert sind, die in Förderrichtung schräg nach vorne angestellt sind, um eine aggressivere Förderwirkung zu erzielen.

Der vorliegenden Erfindung liegt die Aufgabe zugrunde, eine verbesserte landwirtschaftliche Erntemaschine der genannten Art zu schaffen, die Nachteile des Standes der Technik vermeiden und letzteren in vorteilhafter Weise weiterbilden soll. Insbesondere sollen Verstopfungen auf dem Querförderer verlässlich vermieden und besagter Querförderer auch in seinen Randbereichen im Mergerbetrieb sauber gereinigt werden, um Bandreinigungszeiten einzusparen, ohne einen gleichmäßigen Erntegutstrom auf dem Querförderer zu beeinträchtigen oder konstruktiv aufwendige Zusatzaggregate zu benötigen.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also als Hilfsförderer oberhalb von der Förderbahn des Querförderers ein Stachel- und/oder Bürstenrotor vorgeschlagen, der um eine Umlaufachse umlaufende Förderzinken und/oder -borsten aufweist. Solche umlaufenden Förderzinken bzw. Förderborsten besitzen eine deutlich höhere Förder- und Mitnahmewirkung als ein gummibereiftes Reinigungsrad und lassen gleichzeitig dem abzufördernden Erntegut ausreichend Luft auf dem Querförderer, um auch größere Ansammlungen abfördern zu können, da das Erntegut sich nicht wie bei einem gummibereiften Reinigungsrad durch einen schmalen Förderspalt hindurchzwängen muss. Gleichzeitig kann im Vergleich zu einem stehenden Förderband an der heckseitigen Prallfläche eine hohe Abförderwirkung auch in Bereichen über dem Querförderer erzielt werden, die von dessen heckseitigem Rand beabstandet sind.

In Weiterbildung der Erfindung kann der genannte Stachel- und/oder Bürstenrotor eine liegende Umlaufachse besitzen, die zumindest näherungsweise parallel zur Fahrtrichtung ausgerichtet sein kann. Bei einer solchen Umlaufachsen-Ausrichtung können die Förderzinken bzw. Förderborsten in aufrechten Ebenen umlaufen, die quer zur Fahrtrichtung ausgerichtet sind, sodass die Förderzinken bzw. -borsten in einem Abschnitt ihrer Umlaufbahn der Oberseite der Förderbahn des Querförderers zugewandt sind und somit in das auf dem Querförderer liegende Erntegut einstechen und dementsprechend eine besonders hohe Förderwirkung erzielen können.

In Weiterbildung der Erfindung kann der genannte Stachel- und/oder Bürstenrotor nach Art einer Pickup ausgebildete Abstreiferelemente besitzen, zwischen denen die Förderzinken und/oder -borsten angeordnet sind, wobei die genannten Förderzinken und/oder Förderborsten in einem der Förderbahn des Querförderer zugewandten Abschnitt der Umlaufbahn über die besagten Abstreiferelemente hinaus auf den Querförderer vorspringen können, um in das dort liegende Erntegut einstechen und dieses mitnehmen zu können. Die Abstreiferelemente verhindern dabei, dass sich das Erntegut an den Förderzinken und/oder -borsten verfangen bzw. verheddern kann, und stellen sicher, dass das Erntegut von den Förderzinken und -borsten wieder abgestriffen wird, wenn das Erntegut den bestimmungsgemäßen Einwirkungsbereich des Stachel- und/oder Bürstenrotors verlässt.

Die genannten Abstreiferelemente können sich insbesondere bogenförmig um die genannte Umlaufachse herum erstrecken und dabei eine Konturierung besitzen, die im Zusammenspiel mit der Umlaufbahn der Förderzinken bzw. -borsten dafür sorgt, dass die Förderzinken bzw. -borsten zum Ablagebereich des Stachel- und/oder Borstenrotors hin zwischen die Abstreiferelemente einfahren bzw. ihre vorspringende Zinken- bzw. Borstenlänge verkleinern, um das Erntegut an den Abstreiferelementen abzustreifen.

Auch wenn mehrere, durch einen Spalt voneinander beabstandete Abstreiferelemente, zwischen denen die Förderzinken und/oder -borsten laufen, eine hohe Abstreifwirkung erzielen können, müssen nicht zwangsweise mehrere Abstreiferelemente vorgesehen sein, sondern es kann auch ausreichend sein, ein Abstreiferelement neben den umlaufenden Förderzinken und/oder -borsten vorzusehen, so dass beispielsweise nur auf einer Seite des Stachel- und/oder Bürstenrotors ein bogenförmiges Abstreiferblech bzw. ein Abstreiferelement vorgesehen ist. Ist das Abstreiferelement nahe genug an den Förderzinken und/oder -borsten positioniert, kann trotzdem eine ausreichende Abstreifwirkung erzielt werden. Beispielswiese kann ein Spalt zwischen Abstreiferelement und Förderzinken schmäler bzw. kleiner sein als der Durchmesser der Förderzinken oder im Bereich von 50% - 200% oder 50% - 150% des Zinkendurchmessers betragen.

Vorteilhafterweise kann ein solches Abstreiferelement eine geschlossene Ringkontur um die Umlaufachse herum besitzen, wobei ggf. aber auch ein Ringsegment oder ein Spiralsegment um die Umlaufachse herum ausreichend sein kann. Das Abstreiferelement kann insbesondere eine Abstreiferplatte sein, die zwischen dem Rotor und einer aufrechten Rückwand des Mergers vorgesehen, insbesondere im Wesentlichen parallel zur Umlaufebene der Förderzinken und/oder -borsten ausgerichtet sein kann, und unabhängig hiervon eine ovale oder elliptische Kontur oder eine flachgedrückte Ringkontur besitzen kann.

Insbesondere können die Förderzinken bzw. -borsten in einem Umlaufbahnabschnitt, der der Förderbahn des Querförderers abgewandt ist und/oder zu einer Oberseite hin orientiert ist, gänzlich zwischen den Abstreiferelementen eingefahren bzw. bei nur einem Abstreiferelement - bei Betrachtung in Richtung der Umlaufachse - unter die Kontur des Abstreiferelements abgetaucht bzw. eingefahren umlaufen, sodass sich zu schwungvoll auf den Querförderer geworfenes Erntegut nicht oberseitig an dem Stachel- bzw. Bürstenrotor verfangen kann und auch eine entsprechende Verletzungsgefahr dort gebannt ist. Auf der besagten Oberseite der Umlaufbahn können die Abstreiferelemente auch miteinander verbunden ausgebildet sein bzw. eine schlitzfreie Umhausung der Umlaufbahn bilden. Bei nur einem Abstreiferelement kann dieses auf der genannten Oberseite soweit verbreitert sein, dass es eine Umhausung bildet, die die Förderzinken und/oder -borsten abdeckt bzw. sich über deren Umlaufbahn erstreckt.

Zumindest in dem Bereich, in dem die Förderzinken und/oder -borsten über das eine oder die mehreren Abstreiferelemente hinaus vorspringen, können das eine oder die besagten Abstreiferelemente leistenförmige Abstreiferbleche aus Metallblech oder aus Kunststoff bilden und zwischen sich einen Spalt begrenzen, durch den die Förderzinken und/oder -borsten hindurchlaufen und über die Abstreiferelemente vorspringen können.

Die Förderzinken bzw. -borsten können vorteilhafterweise elastisch nachgiebig ausgebildet sein, um im bestimmungsgemäßen Betrieb unter Einwirkung des abzufördernden Ernteguts nach Art eines Biegebalkens elastisch wegfedern bzw. nachgiebig wegbiegen zu können. Beispielsweise können gummielastische Borsten oder Kunststoffzinken Verwendung finden, deren Steifigkeit klein genug ist, um unter dem Druck des Ernteguts sich verformen zu können. Es sind aber auch Zinken aus Metall bzw. Stahl möglich, wobei hier eine gewünschte Biegsamkeit durch entsprechende Schlankheit und/oder Materialwahl wie beispielsweise Federstahl erreicht werden kann.

Die Förderzinken bzw. Förderborsten zeichnen sich in Weiterbildung der Erfindung durch eine schlanke, längliche Konturierung aus, wobei ein Verhältnis der auskragenden Länge der Förderzinken bzw. -borsten zu deren Durchmesser bzw. Dicke ein ganzteiliges Vielfaches betragen kann. Beispielsweise können die Förderzinken bzw. -borsten mehr als dreimal oder mehr als fünfmal oder mehr als zehnmal länger als dick sein.

Beispielsweise können die genannten Förderzinken und/oder -borsten in Form elastischer Finger ausgebildet sein, die von der Umlaufachse weg auskragend vorgesehen sind. Solche Finger können im Querschnitt dicker als Stahlstifte oder Borsten ausgebildet sein, besitzen trotzdem aber - ähnlich menschlichen Fingern - eine insgesamt längliche, schlanke Kontur, wobei die Fingerlänge ein Vielfaches der Fingerdicke betragen kann.

In Weiterbildung der Erfindung können die Förderzinken, insbesondere die vorgenannten Finger, sich zu ihrer auskragenden Spitze hin leicht verjüngen.

Eine ausreichende Nachgiebigkeit der Förderzinken bzw. -borsten kann insbesondere dann von Vorteil sein, wenn der Stachel- bzw. Bürstenrotor rotatorisch freigängig montiert ist oder nur durch das Erntegut selbst angetrieben wird. In diesem Fall kann das auf den Stachel- bzw. Bürstenrotor auflaufende Erntegut dessen Förderzinken bzw. -borsten leicht umbiegen und hierdurch eine rotatorische Antriebskraft leichter erzeugen.

In alternativer Weiterbildung der Erfindung kann der Stachel- und/oder Bürstenrotor aber auch durch einen Fremdantrieb rotatorisch angetrieben sein, beispielsweise durch einen Elektromotor oder einen Ölmotor oder auch durch eine Koppelung bzw. eine betriebliche Anbindung an den Antrieb des Querförderers. Ein fremdenergiebetätigter rotatorischer Antrieb des Stachel- bzw. Bürstenrotors kann die Förderwirkung nochmals erhöhen und umso verlässlicher sicherstellen, dass ungewünschte Erntegutansammlungen abgefördert werden können.

In vorteilhafter Weiterbildung der Erfindung kann der Rotorantrieb dabei drehzahlvariabel ausgebildet sein, um beispielsweise bei sich aufbauenden Erntegutansammlungen in der Fördergeschwindigkeit erhöht zu werden. Bei einem Elektro- oder Hydromotor kann dies durch Verstellung der Motordrehzahl erfolgen, bei getrieblicher Ankopplung an den Querförderer beispielsweise durch ein verstellbares Getriebe. Vorteilhafterweise kann eine sensorische Erfassung sich aufbauender Erntegutansammlungen vorgesehen sein, beispielsweise mit Hilfe eines berührungslosen Sensors oder auch eines Tasters zur Erfassung der Höhe des sich auf dem Querförderer aufbauenden Erntegutteppichs, wobei dann der Antrieb des Stachel- und/oder Bürstenrotors in Gang gesetzt und/oder in der Antriebsgeschwindigkeit erhöht werden kann, wenn die Sensorik ein entsprechendes Signal bereitstellt, das bspw. angeben kann, dass die Erntegutteppich-Höhe einen Schwellwert überschreitet.

Auch bei nicht geschwindigkeitsvariablem Antrieb kann durch einen fremdenergiebetätigten Rotorantrieb eine Fördergeschwindigkeit des Stachel- bzw. Bürstenrotors eingestellt werden, die von der Fördergeschwindigkeit des Querförderers abweicht, beispielsweise gegenüber der Querförderer-Fördergeschwindigkeit erhöht sein kann. Durch eine beispielsweise erhöhte Fördergeschwindigkeit des Stachel- bzw. Bürstenrotors kann das Aufstauen des Ernteguts am Rand des Querförderers generell verlässlich verhindert werden.

Die Umlaufbahn der Förderzinken und/oder -borsten kann kreisförmig gestaltet sein, wobei die Förderzinken bzw. Förderborsten beispielsweise starr an einem achsförmigen oder hülsenförmigen Zinken- oder Borstenträger montiert sein können, der um die genannte Umlaufachse drehbar gelagert ist. In diesem Falle laufen die Förderzinken bzw. -borsten ungesteuert um die Umlaufachse um. Wie zuvor erläutert, kann nichtsdestotrotz ein Eintauchen bzw. weiteres Auftauchen der Förderzinken bzw. - borsten gegenüber dem zumindest einen Abstreiferelement vorgesehen sein, beispielsweise indem die Abstreiferelemente keine kreisbogenförmige Kontur besitzen, sondern nach Art einer Parabel zu Randabschnitten des Förderbereichs hin sich zunehmend weiter von der Drehachse entfernen, so dass die Förderzinken bzw. -borsten am Anfang des Förderbereichs aus den Schlitzen zwischen den Abstreiferelementen hervortreten und zunehmend weiter vorspringen und dann zum Abgabebereich hin sich wieder zwischen die Abstreiferelemente zurückziehen bzw. weiter eintauchen.

Das ungleichmäßige Vorsprung-Maß der Förderzinken bzw. -borsten über das zumindest eine Abstreiferelement hinaus kann vorteilhafterweise in einem Umlaufbereich um eine Senkrechte auf den Querförderer herum, beispielsweise bei etwa 6 Uhr, ein Maximum aufweisen und in dazu benachbarten Bereichen stromauf und stromab kontinuierlich kleiner werden.

In Weiterbildung der Erfindung können der oder die Abstreifer auch in einem nur recht schmalen Sektor um die Umlaufachse herum vorgesehen sein, wobei dieser Sektor bei nicht beidseitig bzw. nicht umkehrbar arbeitender Mergereinheit ggf. auch asymetrisch zu einer vertikalen Ebene durch die Umlaufachse positioniert sein kann. Bspw. kann auf der Einlaufseite weitgehend auf Abstreiferelemente verzichtet sein bzw. diese dort aufgeschnitten sein, um die Förderzinken bzw. -borsten dort mehr Förderwirkung zu geben.

Unabhängig hiervon kann es auch vorteilhaft sein, das zumindest eine oder die Abstreiferelemente nur auf einer Oberseite der Stachel- bzw. Bürstenwalze vorzusehen, bspw. von etwa 11 Uhr bis 13 Uhr.

Die Förderzinken bzw. -borsten können aber auch gesteuert umlaufen und hierzu beispielsweise verschieblich geführt und durch ein kulissenartiges Steuerelement, beispielsweise in Form einer Umlaufnut und eines darin eingreifenden Stifts gesteuert werden, sowie dies per se bei einem Pickup-Stachelrotor mit gesteuerten Zinken bekannt ist. Vorteilhafterweise sind die Förderzinken bzw. Förderborsten dabei jedoch so gesteuert, dass sie entlang ihrer Umlaufbahn keine Verkippungen erfahren, sondern nur in radialer Richtung ein- und ausfahren. Hierdurch kann die Rotoreinheit in entgegengesetzten Förderrichtungen betrieben werden, also beispielsweise einmal rechts ablegen und bei einer anderen Fahrt links ablegen, ohne dass der Hilfsförderer stören würde bzw. die gewünschte Förderrichtung behindert würde. Da die Förderzinken bzw. Förderborsten bei einer solchen gesteuerten Ausführung nur radial ein- und ausfahren, ansonsten aber ihre Ausrichtung beibehalten, die insbesondere zumindest näherungsweise eine radiale Ausrichtung sein kann, kann der Stachel- bzw. Borstenrotor gleichermaßen im Uhrzeigersinn und entgegen dem Uhrzeigersinn umlaufen und in beiden Drehrichtungen seine gewünschte Förderwirkung entfalten.

Unabhängig von einer ungesteuerten oder gesteuerten Ausbildung der Förderzinken bzw. Förderborsten kann die Umlaufbahn der Förderzinken bzw. -borsten aber auch eine von der Kreisbahn abweichende Konturierung besitzen, beispielsweise elliptisch oder oval konturiert sein, so dass der Stachel- bzw. Borstenrotor mehr oder weniger den Charakter eines Bandrechens bekommt, wenn die Umlaufbahn mehr oder minder flach gedrückt, beispielsweise oval konturiert ist.

Bei einer solchen nicht kreisförmigen Umlaufbahn kann es vorteilhaft sein, wenn die längere Hauptachse der Umlaufbahn liegend ausgerichtet und die kürzere Hauptachse der Umlaufbahn aufrecht ausgerichtet ist. Hierdurch erhalten die Förderzinken bzw. -borsten eine besonders hohe Förderwirkung, da sie über eine verhältnismäßig längere Wegstrecke aktiv sein und das Erntegut aktiv abfördern können. Diese aktive Wegstrecke ist die dem Querförderer zugewandte Seite der Umlaufbahn.

Unabhängig von der genannten Umlaufbahn der Förderzinken bzw. -borsten kann es vorteilhaft sein, den Stachel- und/oder Bürstenrotor in mindestens zwei, vorzugsweise auch drei oder vier Rotorsegmente zu unterteilen, wobei jedes der Rotorsegmente zumindest einen oder mehrere Förderzinken bzw. -borsten umfasst. Die genannten Rotorsegmente können insbesondere nach Art von Kuchenstücken ausgebildet sein, so dass sich der Stachel- und/oder Bürstenrotor aus mehreren Keilstücken bzw. Kuchenstücken zusammensetzt, die mit ihrer Spitze bzw. ihrem schmalen Ende zur Umlaufachse hin angeordnet sind.

Vorteilhafterweise können die genannten Rotorsegmente zueinander identisch ausgebildet sein, so dass es in einfacher Weise möglich ist, ein beliebiges Rotorsegment durch ein anderes Rotorsegment zu ersetzen bzw. muss nur ein Rotorsegment vorgehalten werden, um ein verschlissenes oder beschädigtes Rotorsegment ersetzen zu können. Hierzu kann vorteilhafterweise jedes Rotorsegment separat lösbar befestigt sein, beispielsweise mittels Schraubbolzen oder einer Klemmplatte oder dergleichen. Mit anderen Worten kann ein Rotorsegment entfernt und ausgetauscht werden, während die übrigen Rotorsegmente montiert bleiben können.

Die Rotorsegmente können jeweils einen Befestigungsfußabschnitt besitzen, an dem die Förderzinken und/oder -borsten befestigt sind und von dem die Förderzinken und/oder -borsten auskragen, vorzugsweise fächerförmig auskragen. Der genannte Befestigungsfußabschnitt kann vorzugsweise eine flache Kuchenstückform besitzen, um an einer drehbar gelagerten Rotornabe befestigt zu werden.

In vorteilhafter Weiterbildung der Erfindung können die Rotorsegmente voneinander beabstandet angeordnet sein und/oder zwischen sich einen Spalt oder Radialspalt begrenzen. Eine Beabstandung der Rotorsegmente kann die separate Montage und Demontage erleichtern. Gleichzeitig kann ein Spalt zwischen den Rotorsegmenten aber auch vorteilhaft sein, um ein Verheddern des Ernteguts zu vermeiden. Das Spaltmaß kann beispielsweise mindestens 5mm oder auch mehr als 10mm betragen, wobei gemäß einer vorteilhaften Ausführung der Spalt bzw. Radialspalt eine Spaltbreite im Bereich vom 5mm - 15 mm haben kann.

Der genannte Spalt zwischen den Rotorsegmenten kann sich vorteilhafterweise bis zur Umlaufachse erstrecken und/oder zumindest zwischen den zuvor genannten Befestigungsfußabschnitten vorgesehen sein.

Besitzen die Rotorsegmente jeweils nur einen Förderzinken wird eine maximale Unterteilung erzielt und die genannten Spalte zwischen den Segmenten können sich zwischen jeweils benachbarten Förderzinken tief zur Umlaufachse hin erstrecken. Bei mehreren Förderzinken an einem Segment können sich die genannten Spalte rechts und links vom Segment zu den dort jeweils benachbarten Segmenten hin erstrecken und bis zur Umlaufachse reichen.

Die Rotorsegmente können in vorteilhafter Weiterbildung der Erfindung jeweils integral einstückig, materialhomogen ausgebildet sein, wobei die einstückige, materialhomogene Ausbildung sowohl die Förderzinken und/oder -borsten als auch die genannten Befestigungsfußabschnitte umfassen kann. Insbesondere können die Förderzinken und/oder -borsten an den Befestigungsfußabschnitten integral einstückig, materialhomogen angeformt sein. Alternativ wäre es aber auch möglich, die Förderzinken und/oder -borsten separat vom Befestigungsfußabschnitt auszubilden und daran starr zu befestigen.

Insbesondere können die Rotorsegmente aus einem elastischen, beispielsweise gummielastischen Material bestehen.

In Weiterbildung der Erfindung können die Förderzinken und/oder -borsten mit ihren auskragenden Enden einen Außendurchmesser des Stachel- und/oder Bürstenrotors definieren, der mehr als 150% oder mehr als 200%, insbesondere etwa 200 - 300% eines Innendurchmessers beträgt, welcher von Fußabschnitten der Förderzinken und/oder -borsten und/oder dem genannten Befestigungsfußabschnitt, von dem die Förderzinken bzw. -borsten auskragen, definiert wird.

In Weiterbildung der Erfindung kann es auch vorteilhaft sein, den Stachel- und/oder Bürstenrotor in einer Ebene quer zur Umlaufachse zu unterteilen. Beispielsweise können zwei Stachel- und/oder Bürstenrotoren koaxial zueinander und/oder zumindest näherungsweise parallel zueinander voneinander beabstandet sein. Insbesondere können zwei oder mehr als zwei Stachel- und/oder Bürstenrotoren um dieselbe Umlaufachse umlaufen. Hierdurch wird es beispielsweise möglich, je nach Erntegut den Stachel- und/oder Bürstenrotor zu verbreitern oder zu verschmälern, indem ein oder mehrere zusätzliche Stachel- und/oder Bürstenrotoren auf die Umlaufachse montiert bzw. von dieser entfernt werden. Gegebenenfalls kann auch mit Distanzstücken zwischen den mehreren Bürsten- und/oder Stachelrotoren, deren Beabstandung verändert werden und hierdurch eine Verbreiterung oder Verschmälerung der Gruppe von Rotoren erreicht werden. Gegebenenfalls können die mehreren Stachel- und/oder Bürstenrotoren aber auch unmittelbar aufeinander sitzen, insbesondere derart, dass die Zinken bzw. Borsten bzw. Finger bei Betrachtung in Richtung der Umlaufachse miteinander fluchten. Bei in Richtung der Umlaufachse beabstandeter Anordnung können die Rotoren ggf. auch unabhängig voneinander umlaufen und/oder sich gegeneinander verdrehen, insbesondere bei einer freigängigen Anordnung, bei der das Erntegut die Rotoren antreibt.

Die Erfindung wird nachfolgend anhand eines vorteilhaften Ausführungsbeispiels und zugehörigen Zeichnungen näher erläutert. In den Zeichnungen zeigen:
- Fig. 1:: eine ausschnittsweise perspektivische Darstellung der Mergereinheit einer landwirtschaftlichen Erntemaschine nach einer vorteilhaften Ausführung der Erfindung, die einen stromaufseitigen Abschnitt des Querförderers der Mergereinheit und den oberhalb angeordneten Hilfsförderer in Form eines Stachel- und/oder Bürstenrotors zeigt,
- Fig. 2:: eine ausschnittsweise Frontansicht der Mergereinheit aus Fig. 1, die den Stachel- bzw. Bürstenrotor oberhalb des Querförderbands der Mergereinheit zeigt,
- Fig. 3:: eine Seitenansicht der Mergereinheit aus den vorhergehenden Figuren in einer Blickrichtung entsprechend der Förderrichtung des Querförderers, wobei der Hilfsförderer oberhalb des Querförderers gezeigt ist,
- Fig. 4:: eine ausschnittsweise Frontansicht der Mergereinheit, die den Stachel- bzw. Bürstenrotor oberhalb des Querförderbands der Mergereinheit ohne Abstreifer zeigt,
- Fig. 5:: eine perspektivische Ansicht eines segmentierten Stachel- bzw. Bürstenrotors, der vier separate voneinander beabstandete Rotorsegmente umfasst, gemäß einer weiteren vorteilhaften Ausführung der Erfindung
- Fig. 6:: eine perspektivische Ansicht eines der Rotorsegmente des segmentierten Rotors aus Fig. 5, der mehrere Förderzinken bzw. -finger umfasst, die von einem Befestigungsfußabschnitt fächerförmig auskragen,
- Fig. 7:: eine Draufsicht auf den segmentierten Stachel- bzw. Bürstenrotor aus Fig. 5,
- Fig. 8:: eine Schnittansicht des segmentierten Stachel- bzw. Bürstenrotors aus den vorherigen Figuren, die die Befestigung der Rotorsegmente an einer drehbar gelagerten Rotornabe zeigt,
- Fig. 9:: eine Frontalansicht eines Rotorsegments des segmentierten Stachel- bzw. Bürstenrotors aus den vorherigen Figuren,
- Fig. 10:: eine Draufsicht auf die Umfangsseite eines Rotorsegments,
- Fig. 11:: eine Schnittansicht des Rotorsegments entlang einer Schnittebene, die durch die Umlaufachse und einen der Förderzinken bzw. -finger geht,
- Fig. 12:: eine perspektivische Ansicht eines Rotorsegments,
- Fig. 13:: eine perspektivische Ansicht des segmentierten Stachel- bzw. Bürstenrotors in seiner Einbauumgebung über dem Förderband eines Mergers, an dessen Rückwand, wobei gemäß einer vorteilhaften Ausführung der Erfindung zwei segmentierten Stachel- bzw. Bürstenrotoren koaxial zueinander auf derselben Umlaufachse montiert sind, und
- Fig. 14:: eine perspektivische Ansicht eines segmentierten Förderrotors in seiner Einbauumgebung über dem Förderband eines Mergers, wobei zwischen dem Rotor und der Rückwand des Mergers ein Abstreiferelement vorgesehen ist, an dem die Förderzinken des Rotors entlangstreifen.

Wie die Figuren zeigen, kann die landwirtschaftliche Erntemaschine 1 beispielsweise in Form eines Schwaders ausgebildet sein, um auf dem Boden verstreutes Erntegut aufnehmen und einen Schwad ablegen zu können. Die Erntemaschine 1 kann aber auch als Kombinationsgerät ausgebildet sein und beispielsweise ein Mähwerk umfassen, an dessen stromabseitigen Ende dann die Mergereinheit 2 der Erntemaschine 1 angeordnet wird.

Wie die Figuren zeigen, umfasst die Mergereinheit 2 einen liegend angeordneten Querförderer 3, der beispielsweise ein Bandförderer sein kann und ein endlos umlaufend angetriebenes Förderband 4 aufweisen kann. Wie eingangs erwähnt, könnte anstelle eines durchgängigen Förderbands ggf. aber auch ein Riemenförderer mit mehreren nebeneinander angeordneten, endlos umlaufenden Förderriemen oder - ketten, oder ggf. auch ein Rollenförderer als Querförderer 3 vorgesehen sein. In jedem Fall kann der Querförderer 3 eine liegende, vorzugsweise etwa ebene Förderbahn 5 besitzen, die sich quer zur Fahrtrichtung 6 erstreckt.

Um auf dem Boden liegendes Erntegut aufsammeln zu können, umfasst die Mergereinheit 2 einen Aufsammelförderer 7, der beispielsweise nach Art einer Pickup mit einer rotatorisch umlaufend antreibbaren Stachelwalze 8 ausgebildet sein kann. Das vom Aufsammelförderer 7 aufgesammelte Erntegut kann auf der Förderbahn 5 des Querförderers 3 abgelegt und von letzterem quer zur Fahrtrichtung 6 zu einer Seite hin abgefördert und dann in einem Schwad abgelegt werden.

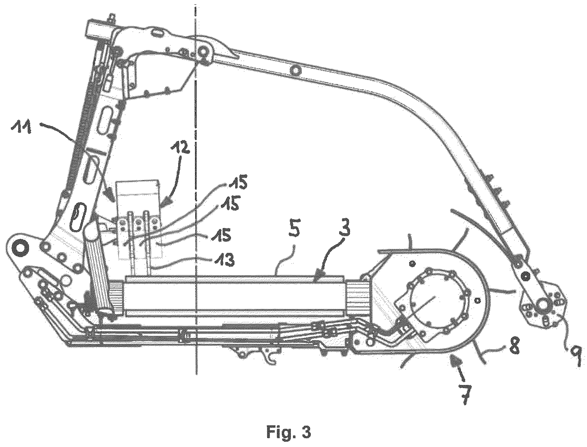

Wie die Figur 3 zeigt, kann dem Aufsammelförderer 7 ein Niederhalter 9 beispielsweise umfassend eine Einlaufwalze oder ein anderes, den Einlauf steuerndes Einlauforgan zugeordnet sein, beispielsweise mit einem gatterartigen Einlaufrechen oder -leitblech oder ähnliches.

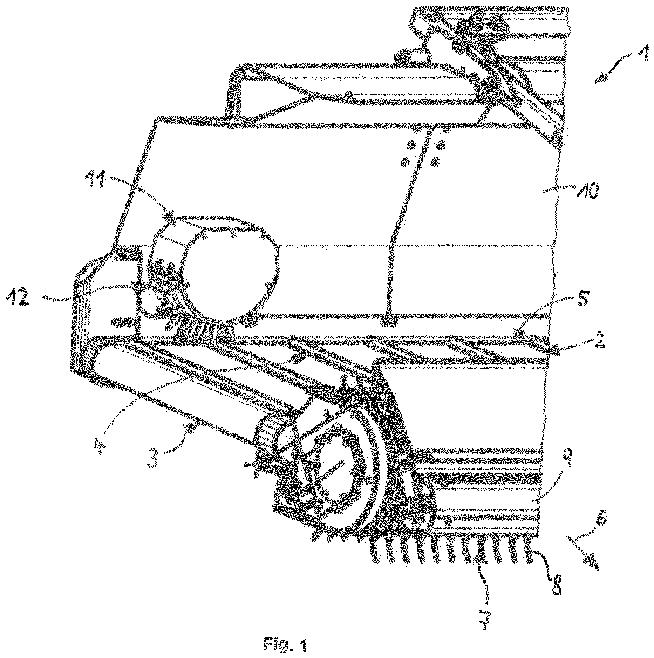

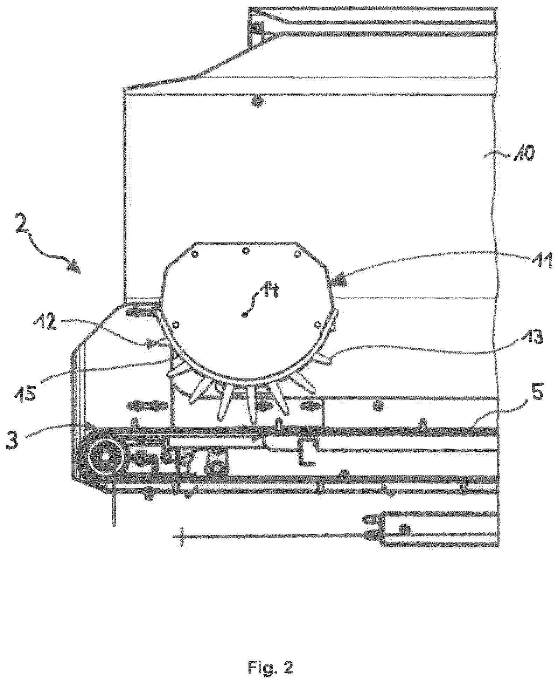

Wie die Figuren 1 und 2 verdeutlichen, kann der Querförderer 3 an seinem - bei Betrachtung der Fahrtrichtung 6 - heckseitigen Randabschnitt von einer aufrechten Wandung 10 begrenzt sein, die ein Herabfallen des Ernteguts an dem dem Aufsammelförderer 7 gegenüberliegenden Randabschnitt des Querförderers 3 verhindert und/oder das Erntegut auf dem Querförderer 3 entlang leitet.

Wie die Figuren zeigen, ist ferner oberhalb des Querförderers 3 in zumindest einem Randabschnitt bzw. Endabschnitt des Querförderers 3 ein Hilfsförderer 11 vorgesehen, der beispielsweise auf der dem Querförderer 3 zugewandten Seite der genannten Wandung 10 montiert sein kann bzw. angeordnet sein kann.

Der genannte Hilfsförderer 11 umfasst einen Stachel- bzw. Bürstenrotor 12, der eine Vielzahl an Förderzinken 13 und/oder Förderborsten 13 aufweist, die in Umfangsrichtung des Rotors verteilt angeordnet sind. Wie Fig. 3 verdeutlicht, kann der Stachel- bzw. Bürstenrotor 12 dabei mehrere Reihen solcher Förderzinken bzw. Förderborsten 13 aufweisen, die in parallelen, voneinander beabstandeten Ebenen angeordnet sein können, insbesondere in Richtung der Umlaufachse 14 versetzt angeordnet sein können.

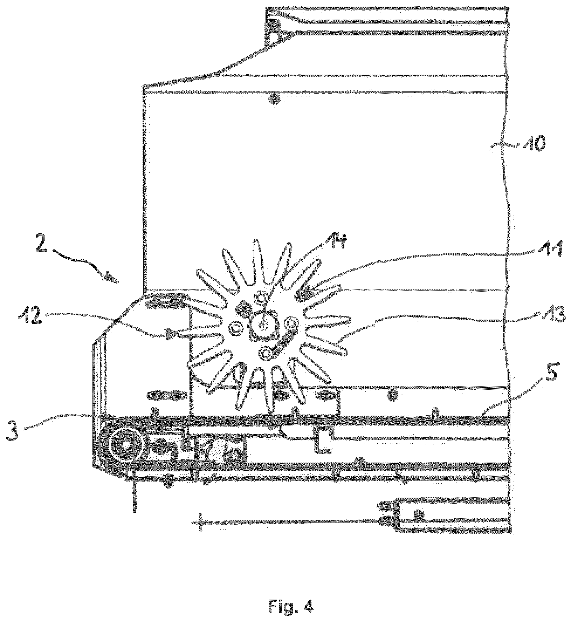

Die Figur 4 zeigt die Verteilung der Förderzinken bzw. -borsten 13 und deren Konturierung noch deutlicher. Wie Figur 4 zeigt, kann der Stachel- bzw. Bürstenrotor 12 mit seinen Förderzinken bzw. -borsten 13 insgesamt betrachtet etwa sternförmig konturiert sein. Insbesondere bei einer Ausbildung als Bürste mit einer Vielzahl von Borsten kann der Stachel- bzw. Bürstenrotor 12 aber auch weniger sternförmig konturiert sein und/oder eine eher gleichmäßigere Konturierung in Umfangsrichtung aufweisen und/oder eine mehr "strubbelige" bzw. eine unstrukturiertere Verteilung der Förderborsten 13 besitzen.

Dabei ist es auch möglich, beispielsweise eine Reihe Förderborsten 13 und eine Reihe Förderzinken 13 vorzusehen, wobei beispielsweise weichere Förderborsten 13 in der in Fahrtrichtung 6 vorderen Reihe und steifere Förderzinken 13 in der in Fahrtrichtung 6 hinteren Reihe vorgesehen sein können.

Wie die Figuren 1 bis 3 zeigen, können die Förderzinken bzw. -borsten 13 zwischen Abstreiferelementen 15 angeordnet sein, die sich bogenförmig um die Umlaufachse 14 herum erstrecken können und zwischen sich Schlitze begrenzen, durch die hindurch sich die Förderzinken bzw. -borsten 13 erstrecken können.

Wie Fig. 2 verdeutlicht, können die Abstreiferelemente 15 dabei derart konturiert und/oder auf die Umlaufbahn der Förderzinken bzw. -borsten 13 abgestimmt sein, dass die vorspringende Länge der Förderzinken bzw. -borsten 13 entlang der Umlaufbahn unterschiedlich ist bzw. sich verändert. Insbesondere kann die vorspringende Länge der Förderzinken bzw. -borsten 13 in einem Sektor der Umlaufbahn, der eine Senkrechte auf den Querförderer 3 umfasst, beispielsweise um 6 Uhr herum, maximal sein und zu benachbarten, sich anschließenden Bereichen, beispielsweise in Bereichen 7-9 Uhr und 3-5 Uhr jeweils kleiner bzw. kürzer werden, vgl. Fig. 2.

Mit anderen Worten können die Abstreiferelemente 15 derart konturiert sein, dass die Förderzinken bzw. -borsten 13 entlang ihrer Umlaufbahn um die Umlaufachse 14 zwischen den Abstreiferelementen 15 zunächst weiter ausfahren, bis sie in einer Lage direkt gegenüber dem Querförderer 3 maximal ausgefahren sind, und sich dann wieder weiter zurückziehen, um das Erntegut am bestimmungsgemäßen Ablegebereich des Hilfsförderers 11 abzustreifen, vgl. Fig. 2. Je nach Drehrichtung des Stachel- bzw. Bürstenrotors 12 kann der besagte Ablegebereich etwa im Bereich zwischen 7 Uhr und 9 Uhr, beispielsweise um 8 Uhr herum oder zwischen 5 Uhr und 3 Uhr beispielweise um etwa 4 Uhr herum angeordnet sein.

Laufen die Förderzinken bzw. -borsten 13 ungesteuert auf einer Kreisbahn um, kann das besagte Ein- und Ausfahren gegenüber den Abstreiferelementen 15 durch eine von der Kreisform abweichende bogenförmige Konturierung der Abstreiferelemente 15 erzielt werden, so wie sie beispielsweise Fig. 2 zeigt. Beispielsweise kann die Beabstandung der Abstreiferelemente 15 im bestimmungsgemäßen Ablegesektor größer sein als im bestimmungsgemäßen Fördersektor.

Alternativ oder zusätzlich kann aber auch eine Steuerung der Förderzinken bzw. - borsten 13 vorgesehen sein und dabei insbesondere derart beschaffen sein, dass die Förderzinken bzw. -borsten 13 in radialer Richtung bezogen auf die Umlaufachse ein- und ausfahren können.

Solche gesteuerten Förderzinken bzw. -borsten 13 können hierzu beispielsweise verschieblich auf einem drehbar gelagerten Träger geführt und durch ein kulissenartiges Steuerelement, beispielsweise in Form einer Umlaufnut und eines darin eingreifenden Stifts gesteuert werden, sowie dies per se bei einem Pickup-Stachelrotor mit gesteuerten Zinken bekannt ist. Vorteilhafterweise sind die Förderzinken 13 bzw. Förderborsten 13 des Stachel- bzw. Bürstenrotors 12 dabei jedoch so gesteuert, dass sie entlang ihrer Umlaufbahn keine Verkippungen erfahren, sondern nur in radialer Richtung ein- und ausfahren. Hierdurch kann die Mergereinheit 2 in entgegengesetzten Förderrichtungen betrieben werden, also beispielsweise einmal rechts ablegen und bei einer anderen Fahrt links ablegen, ohne dass der Hilfsförderer 11 stören würde bzw. die gewünschte Förderrichtung behindert würde. Da die Förderzinken bzw. Förderborsten 13 bei einer solchen gesteuerten Ausführung nur radial ein- und ausfahren, ansonsten aber ihre Ausrichtung beibehalten, die insbesondere zumindest näherungsweise eine radiale Ausrichtung sein kann, kann der Stachel- bzw. Borstenrotor 12 gleichermaßen im Uhrzeigersinn und entgegen dem Uhrzeigersinn umlaufen und in beiden Drehrichtungen seine gewünschte Förderwirkung entfalten. Anzumerken ist, dass die Förderzinken 13 dabei gleichwohl eine bspw. konische Schrägstellung besitzen können bzw. so angeschrägt bzw. abgebogen sein können, dass sie gemeinsam eine bspw. suppentellerförmige Hüllfläche definieren. Eine solche Schrägstellung behindert die Förderwirkung bei Drehrichtungsumkehr nicht.

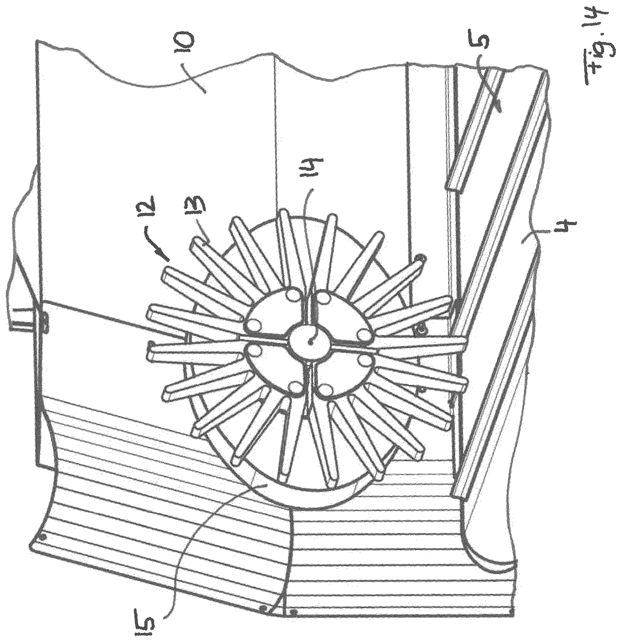

Wie Fig. 14 zeigt, kann es auch ausreichend sein, nur ein Abstreiferelement 15 zu verwenden bzw. vorzusehen, das auf einer Stirnseite des Stachel- bzw. Bürstenrotors 12 angeordnet sein kann, so dass die Förderzinken bzw. -borsten 13 unmittelbar neben dem Abstreiferelement 15 angeordnet sind und/oder an diesem Abstreiferelement 15 in knappem Abstand vorbeistreifen. Insbesondere kann ein solches Abstreiferelement 15 zwischen dem Stachel- bzw. Bürstenrotor 12 und einer Rückwand 10 des Mergers vorgesehen sein und/oder sich in einer Ebene senkrecht zur Umlaufachse 14 erstrecken. Das Abstreiferelement 15 kann in Form eines Abstreiferblechs ausgebildet sein, insbesondere aber auch nach Art einer Abstreiferplatte ausgebildet sein, die Stirnseite an Stirnseite mit dem Rotor positioniert ist, so dass die Umfangskontur der Abstreifer die Abstreifkontur bildet.

Vorteilhafterweise kann das Abstreiferelement oval oder elliptisch konturiert sein bzw. die Form eines flachgedrückten oder abgeflachten Rings besitzen, wobei die längere Hauptachse der Kontur des Abstreiferelements 15 liegen ausgerichtet sein kann, insbesondere senkrecht zur Umlaufachse 14 und parallel zur Förderbahn 5 des Mergers.

Durch die flachgedrückte, insbesondere ovale oder elliptische Kontur springen die Förderzinken bzw. -borsten auf der Unterseite maximal bzw. recht weit über das Abstreiferelement vor, während der Überstand der Förderzinken bzw. -borsten 13 über das Abstreiferelement 15 hinaus zu beiden Seiten hin abnimmt, genauer gesagt zu 3 Uhr und 9 Uhr hin, vgl. Fig. 14. An der Oberseite können die Förderzinken 13 wieder weiter über das Abstreiferelement 15 vorspringen, da das Erntegut hier bereits abgestriffen ist. Beispielsweise können die Förderzinken 13 - bei Betrachtung in Richtung der Umlaufachse 14 - im Bereich von 9 Uhr und 15 Uhr bzw. im Bereich um die Länge der Hauptachse des Kontur des Abstreiferelements 15 herum vollständig unter die Kontur des Abstreiferelements abtauchen bzw. keinen Überstand mehr besitzen, um sicherzustellen, dass das Erntegut verlässlich abgestriffen wird.

Wie Fig. 4 zeigt, kann die Stachel- bzw. Bürstenrotor 12 auch ohne Abstreifer 15 benutzt werden, insbesondere wenn Erntegut bearbeitet werden soll, das nicht bzw. weniger zum Klebenbleiben bzw. Verheddern an den Förderzinken bzw. -borsten 13 neigt. Auch bei einer Ausbildung als Bürstenrotor 12 mit feineren, elastischen Förderborsten 13 kann ggf. auch bei klebrigerem oder verfilzterem Erntegut ohne Abstreifer 15 gearbeitet werden, da die Förderborsten durch ihre Elastizität und eine Rückfeder- bzw. Rückstellbewegung am Ablegebereich aufgrund des dort nachlassenden Erntegutdrucks auf die Borsten, das Erntegut sozusagen abschütteln können.

Die Förderzinken bzw. -borsten 13 können nämlich vorteilhafterweise elastisch nachgiebig ausgebildet sein, um im bestimmungsgemäßen Betrieb unter Einwirkung des abzufördernden Ernteguts nach Art eines Biegebalkens elastisch wegfedern bzw. nachgiebig wegbiegen zu können. Beispielsweise können gummielastische Borsten oder Kunststoffzinken Verwendung finden, deren Steifigkeit klein genug ist, um unter dem Druck des Ernteguts sich verformen zu können, wobei ggf. auch stärkere Verformungen auftreten können, die zu Biegewinkeln von bspw. mehr als 20° oder mehr als 30° führen können. Dies hilft dabei, das Erntegut im bestimmungsgemäßen Ablegebereich des Stachel- bzw. Bürstenrotors 12 abzuschütteln und von den Förderzinken bzw. 13 zu lösen.

Es sind aber auch Zinken aus Metall bzw. Stahl möglich, wobei hier eine gewünschte Biegsamkeit durch entsprechende Schlankheit und/oder Materialwahl wie beispielsweise Federstahl erreicht werden kann.

Die Förderzinken 13 bzw. Förderborsten 13 zeichnen sich in Weiterbildung der Erfindung durch eine schlanke, längliche Konturierung aus, wobei ein Verhältnis der auskragenden Länge der Förderzinken bzw. -borsten 13 zu deren Durchmesser bzw. Dicke ein ganzteiliges Vielfaches betragen kann. Beispielsweise können die Förderzinken bzw. -borsten 13 mehr als dreimal oder mehr als fünfmal oder mehr als zehnmal länger als dick sein.

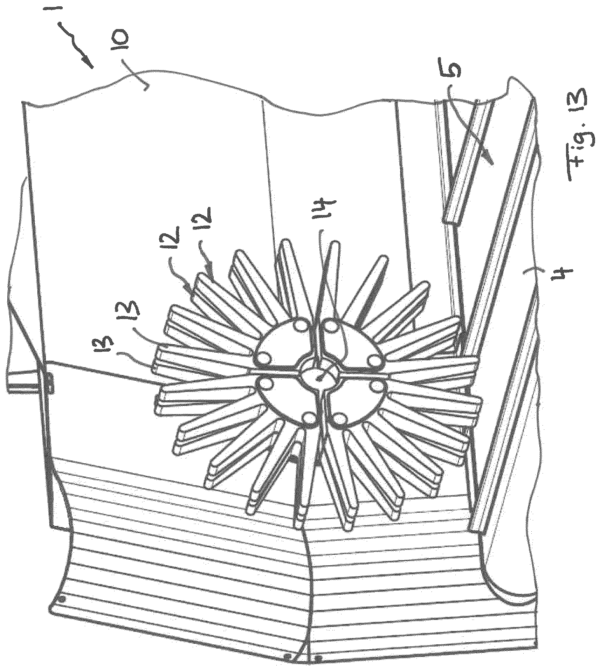

In Weiterbildung der Erfindung kann der Stachel- und/oder Bürstenrotor 12 in einer Ebene quer zur Umlaufachse 14 unterteilt sein bzw. können zwei oder mehr als zwei Stachel- bzw. Bürstenrotoren 12 in Richtung der Umlaufachse 14 hintereinander angeordnet sein, vgl. Figur 13. Hierdurch kann die Dicke bzw. Breite des Rotors in Richtung der Umlaufachse 14 an verschiedene Ernteguttypen angepaßt werden.

Beispielsweise können zwei Stachel- und/oder Bürstenrotoren 12 koaxial zueinander und/oder zumindest näherungsweise parallel zueinander, voneinander beabstandet vorgesehen sein. Insbesondere können zwei oder mehr als zwei Stachel- und/oder Bürstenrotoren 12 um dieselbe Umlaufachse 14 umlaufen. Hierdurch wird es in sehr einfacher Weise möglich, je nach Erntegut den Stachel- und/oder Bürstenrotor 12 zu verbreitern oder zu verschmälern, indem ein oder mehrere zusätzliche Stachel- und/oder Bürstenrotoren 12 auf die Umlaufachse montiert bzw. von dieser entfernt werden. Gegebenenfalls kann auch mit Distanzstücken zwischen den mehreren Bürsten- und/oder Stachelrotoren 12, deren Beabstandung verändert werden und hierdurch eine Verbreiterung oder Verschmälerung der Gruppe von Rotoren erreicht werden. Gegebenenfalls können die mehreren Stachel- und/oder Bürstenrotoren 12 aber auch unmittelbar aufeinander sitzen, insbesondere derart, dass die Zinken 13 bzw. Borsten bzw. Finger bei Betrachtung in Richtung der Umlaufachse 14 miteinander fluchten, vgl. Figur 13.

Bei in Richtung der Umlaufachse 14 beabstandeter Anordnung können die Rotoren 12 ggf. auch unabhängig voneinander umlaufen und/oder sich gegeneinander verdrehen, insbesondere bei einer freigängigen Anordnung, bei der das Erntegut die Rotoren 12 antreibt.

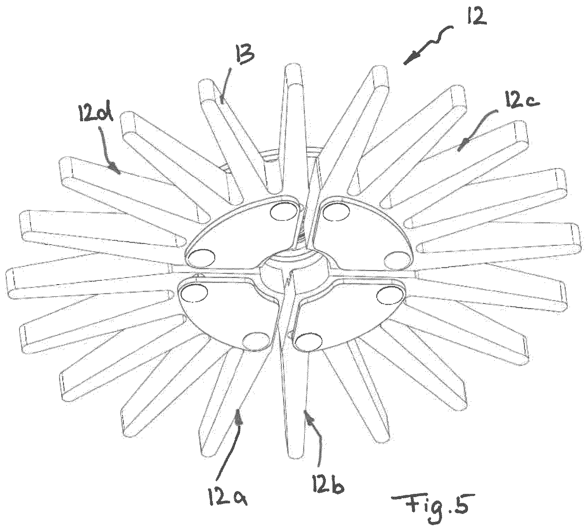

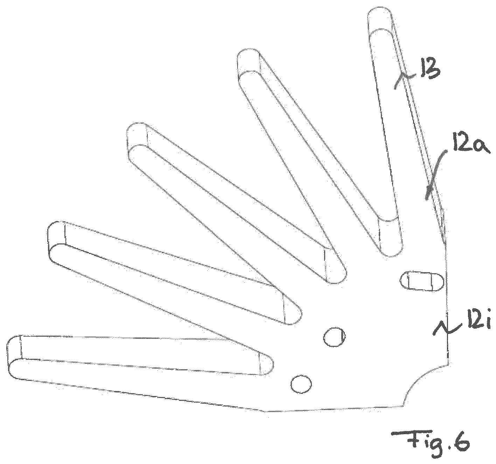

Wie die genannte Fig. 13, aber auch die Fig. 5-12 und 14 zeigen, kann der Stachel- und/oder Bürstenrotor 12 vorteilhafterweise in mehrere Rotorsegmente 12a und b unterteilt bzw. segmentiert sein, beispielsweise in vier solche Rotorsegmente 12a-d, die jeweils einen Rotorbereich von etwa 90° abdecken können.

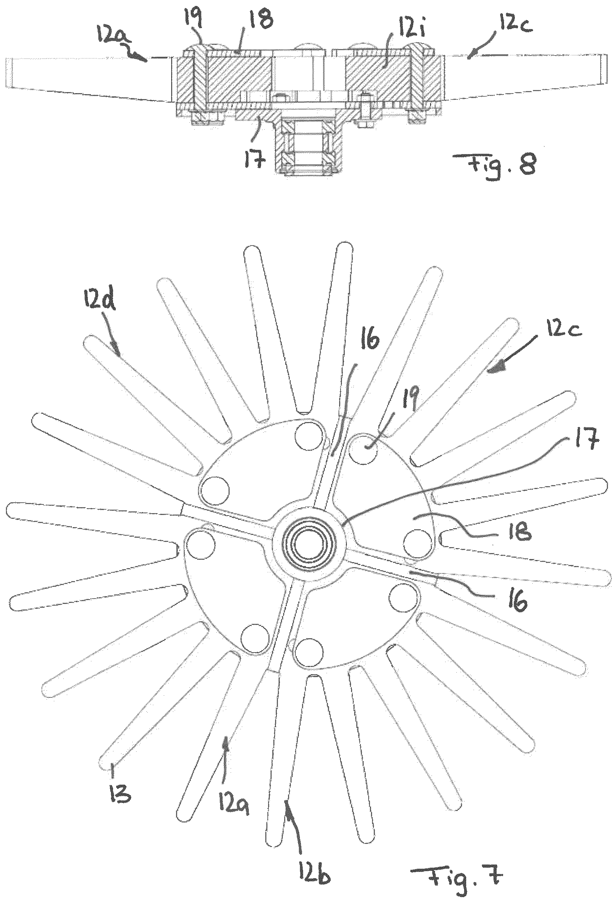

Dabei kann jedes der Rotorsegmente 12 a-d zumindest einen oder mehrere Förderzinken 13 bzw. -borsten umfassen. Die genannten Rotorsegmente 12 a-d können insbesondere nach Art von Kuchenstücken ausgebildet sein, so dass sich der Stachel- und/oder Bürstenrotor 12 aus mehreren Keilstücken bzw. Kuchenstücken zusammensetzt, die mit ihrer Spitze bzw. ihrem schmalen Ende zur Umlaufachse 14 hin angeordnet sind, vgl. Figur 5 und 7.

Vorteilhafterweise können die genannten Rotorsegmente 12 a-d zueinander identisch ausgebildet sein, so dass es in einfacher Weise möglich ist, ein beliebiges Rotorsegment 12a durch ein anderes Rotorsegment 12 b-d zu ersetzen bzw. muss nur ein Rotorsegment vorgehalten werden, um ein verschlissenes oder beschädigtes Rotorsegment ersetzen zu können. Hierzu kann vorteilhafterweise jedes Rotorsegment 12 a-d separat lösbar befestigt sein, beispielsweise mittels Schraubbolzen 19, Spannhebeln oder einer Klemmplatte 18 oder dergleichen, vgl. Fig. 7 und 8.

Mit anderen Worten kann ein Rotorsegment 12 a-d entfernt und ausgetauscht werden, während die übrigen Rotorsegmente 12 a-d montiert bleiben können.

Die Rotorsegmente 12 a-d können jeweils einen Befestigungsfußabschnitt 12i besitzen, an dem die Förderzinken und/oder -borsten 13 befestigt sind und von dem die Förderzinken und/oder -borsten 13 auskragen, vorzugsweise fächerförmig auskragen. Der genannte Befestigungsfußabschnitt 12i kann vorzugsweise eine flache Kuchenstückform besitzen, um an einer drehbar gelagerten Rotornabe 17 befestigt zu werden, vgl. Figur 7 und 8.

In vorteilhafter Weiterbildung der Erfindung können die Rotorsegmente 12 a-d voneinander beabstandet angeordnet sein und/oder zwischen sich einen Spalt 16 oder Radialspalt begrenzen. Eine Beabstandung der Rotorsegmente 12 a-d kann die separate Montage und Demontage erleichtern. Gleichzeitig kann der Spalt 16 zwischen den Rotorsegmenten 12 a-d aber auch vorteilhaft sein, um ein Verheddern des Ernteguts zu vermeiden. Das Spaltmaß kann beispielsweise mindestens 5mm oder auch mehr als 10mm betragen, wobei gemäß einer vorteilhaften Ausführung der Spalt 16 bzw. Radialspalt eine Spaltbreite im Bereich vom 5mm - 15 mm haben kann.

Der genannte Spalt 16 zwischen den Rotorsegmenten kann sich vorteilhafterweise bis zur Umlaufachse 14 erstrecken und/oder zumindest zwischen den zuvor genannten Befestigungsfußabschnitten vorgesehen sein, vgl. Figur 5 und 7.

Besitzen die Rotorsegmente 12 a-d jeweils nur einen Förderzinken 13 wird eine maximale Unterteilung erzielt und die genannten Spalte 16 zwischen den Segmenten können sich zwischen jeweils benachbarten Förderzinken 13 tief zur Umlaufachse 14 hin erstrecken. Bei mehreren Förderzinken 13 an einem Segment 12 a-d können sich die genannten Spalte 16 rechts und links vom Segment zu den dort jeweils benachbarten Segmenten hin erstrecken und bis zur Umlaufachse 14 reichen, vgl. Figur 7.

Die Rotorsegmente 12 a-d können in vorteilhafter Weiterbildung der Erfindung jeweils integral einstückig, materialhomogen ausgebildet sein, wobei die einstückige, materialhomogene Ausbildung sowohl die Förderzinken und/oder -borsten 13 als auch die genannten Befestigungsfußabschnitte 12i umfassen kann. Insbesondere können die Förderzinken und/oder -borsten 13 an den Befestigungsfußabschnitten 12i integral einstückig, materialhomogen angeformt sein. Alternativ wäre es aber auch möglich, die Förderzinken und/oder -borsten 13 separat vom Befestigungsfußabschnitt 12i auszubilden und daran starr zu befestigen.

Insbesondere können die Rotorsegmente 12 a-d aus einem elastischen, beispielsweise gummielastischen Material bestehen.

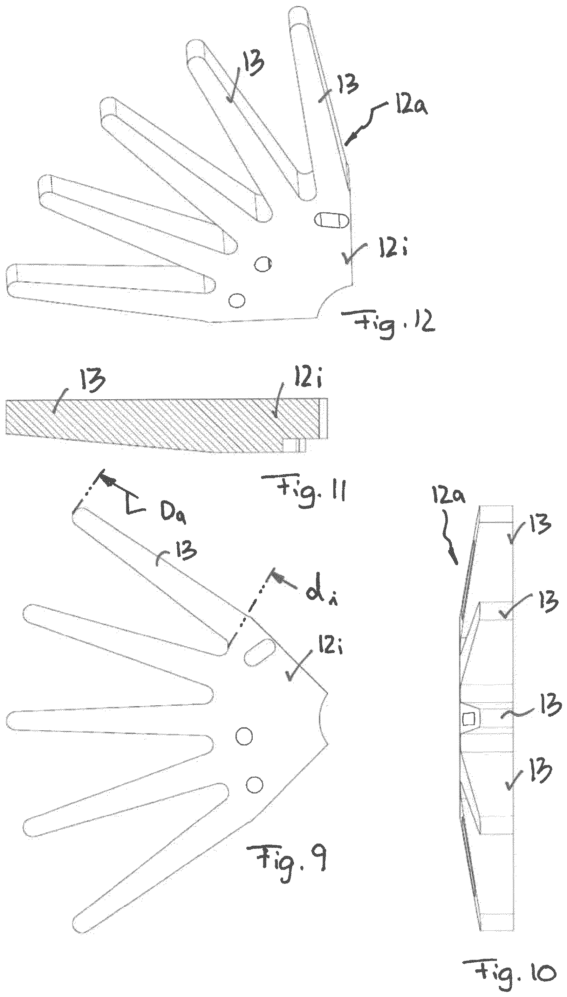

In Weiterbildung der Erfindung können die Förderzinken und/oder -borsten 13 mit ihren auskragenden Enden einen Außendurchmesser Dₐ des Stachel- und/oder Bürstenrotors 12definieren, der mehr als 150% oder mehr als 200%, insbesondere etwa 200 - 300% eines Innendurchmessers dᵢ beträgt, welcher von Fußabschnitten der Förderzinken und/oder -borsten 13 und/oder dem genannten Befestigungsfußabschnitt 12i, von dem die Förderzinken bzw. -borsten 13 auskragen, definiert wird, vgl. Figur 9.

## Patentansprüche

1. Landwirtschaftliche Erntemaschine mit zumindest einer Mergereinheit (2), die einen Aufsammelförderer (7) zum Aufsammeln von Erntegut vom Boden sowie einen Querförderer (3) mit einer liegenden Förderbahn (5) zum Querfördern des aufgesammelten Ernteguts quer zur Fahrtrichtung (6) aufweist, wobei in zumindest einem Randabschnitt des Querförderers (3) oberhalb von dessen Förderbahn (5) ein Hilfsförderer (11) zum Abfördern von Erntegutansammlungen auf der Förderbahn (5) und/oder zum Reinigen der Förderbahn (5) des Querförderers (3) vorgesehen ist, **dadurch gekennzeichnet, dass** der Hilfsförderer (11) einen Stachel- und/oder Bürstenrotor (12) mit um eine Umlaufachse (14) umlaufenden Förderzinken und/oder -borsten (13) aufweist.

2. Landwirtschaftliche Erntemaschine nach dem vorhergehenden Anspruch, wobei die genannte Umlaufachse (14) des Stachel- und/oder Bürstenrotors (12) liegend, etwa parallel zur Fahrtrichtung (6) ausgerichtet ist.

3. Landwirtschaftliche Erntemaschine nach einem der vorhergehenden Ansprüche, wobei die Förderzinken und/oder -borsten (13) neben zumindest einem Abstreiferelement (15) oder zwischen Abstreiferelementen (15) angeordnet sind und in einem der Förderbahn (5) zugewandten Abschnitt ihrer Umlaufbahn um die Umlaufachse (14) über das zumindest eine oder jedes Abstreiferelement (15) hinaus zum Querförderer (3) vorspringen, wobei die Förderzinken und/oder -borsten (13) entlang ihrer Umlaufbahn um die Umlaufachse (14) unterschiedlich weit über das zumindest eine Abstreiferelement (15) oder die genannten mehreren Abstreiferelemente (15) vorspringen, wobei eine vorspringende Länge der Förderzinken und/oder -borsten (13) in einem der Förderbahn (5) des Querförderers (3) direkt zugewandten Abschnitt der Umlaufbahn ein Maximum besitzt und in einem bestimmungsgemäßen Ablegebereich des Stachel- und/oder Bürstenrotors (12) ein Minimum besitzt und/oder zu dem genannten Ablegebereich hin kontinuierlich kleiner wird.

4. Landwirtschaftliche Erntemaschine nach dem vorhergehenden Anspruch, wobei die Förderzinken und/oder -borsten (13) ungesteuert um die Umlaufachse (14) umlaufen, vorzugsweise eine kreisförmige Umlaufbahn um die Umlaufachse (14) oder eine von der Kreisform abweichende, insbesondere elliptische oder ovale Umlaufbahn aufweisen, und das zumindest eine Abstreiferelement (15) in verschiedenen Sektoren entlang der Umlaufbahn der Förderzinken und/oder -borsten (13) unterschiedlich weit von der Umlaufachse (14) beabstandet ist, wobei das zumindest eine Abstreiferelement (15) vorzugsweise derart bogenförmig konturiert ist, dass der Abstand des Abstreiferelements (15) von der Umlaufachse (14) in einem Bereich, der dem Querförderer (3) direkt gegenüberliegt, minimal ist und zum bestimmungsgemäßen Ablagebereich der Stachel- und/oder Bürstenwalze (12) hin kontinuierlich größer wird.

5. Landwirtschaftliche Erntemaschine nach einem der Ansprüche 1 bis 3, wobei die Förderzinken und/oder -borsten (13) gesteuert um die Umlaufachse (14) umlaufen derart, dass die Förderzinken und/oder -borsten (13) entlang ihrer Umlaufbahn in radialer Richtung zur Umlaufachse (14) eingefahren und ausgefahren werden.

6. Landwirtschaftliche Erntemaschine nach einem der Ansprüche 3 bis 5, wobei das zumindest eine Abstreiferelement (15) eine ovale oder elliptische Kontur um die Umlaufachse (14) herum besitzt, wobei die genannte ovale oder elliptische Kontur mit ihrer längeren Hauptachse liegend oder parallel zur Förderbahn (5) ausgerichtet ist.

7. Landwirtschaftliche Erntemaschine nach einem der Ansprüche 3 bis 6, wobei nur auf einer Seite des Stachel- und/oder Bürstenrotors (12), vorzugsweise zwischen dem Stachel- und/oder Bürstenrotor (12) und einer sich aufrecht erstreckenden Rückwand (10) der Mergereinheit (2), ein Abstreiferelement (15) vorgesehen ist.

8. Landwirtschaftliche Erntemaschine nach einem der vorhergehenden Ansprüche, wobei die Förderzinken und/oder -borsten (13) elastisch nachgiebig, insbesondere gummielastisch ausgebildet sind derart, dass sie unter dem Erntegutdruck unter bestimmungsgemäßem Betrieb sich elastisch verformen.

9. Landwirtschaftliche Erntemaschine nach einem der vorhergehenden Ansprüche, wobei die Förderzinken und/oder -borsten (13) eine frei auskragende Zinken- und/oder Borstenlänge besitzen, die mindestens 3 mal oder mindestens 5 mal oder mindestens 10 mal so groß ist wie eine Dicke der Förderzinken und/oder -borsten (13), und/oder der Stachel- und/oder Bürstenrotor (12) mit seinen Förderzinken und/oder -borsten (13) einen Außendurchmesser definiert, der mehr als 150% oder mehr als 200% oder 200 - 300% eines Innendurchmessers beträgt, der von Fußabschnitten der genannten Förderzinken und/oder -borsten (13) und/oder einem Befestigungsfußabschnitt (12i), von dem die Förderzinken und/oder -borsten (13) auskragen, definiert ist.

10. Landwirtschaftliche Erntemaschine nach einem der vorhergehenden Ansprüche, wobei der Stachel- und/oder Bürstenrotor (12) in mindestens zwei, vorzugsweise drei oder mehr als drei, Rotorsegmente (12a-d) unterteilt ist, wobei jedes Rotorsegment (12a-d) zumindest eine/n Förderzinken und/oder -borste (13) umfaßt, wobei vorzugsweise jedes Rotorsegment (12a-d) gleichviele und mehrere Förderzinken und/oder -borsten (13) aufweist und/oder alle Rotorsegmente (12a-d) gleich ausgebildet sind.

11. Landwirtschaftliche Erntemaschine nach dem vorhergehenden Anspruch, wobei die Rotorsegmente (12a-d)
- Rotorsektoren bilden, die voneinander beabstandet sind und/oder zwischen sich einen Spalt oder Radialspalt mit einer Spaltbreite von mindestens 5mm oder 5mm bis 15 mm begrenzen, und/oder
- jeweils einen Befestigungsfußabschnitt (12i) besitzen, an dem die Förderzinken und/oder -borsten (13) befestigt sind und von dem die Förderzinken und/oder -borsten (13) auskragen, vorzugsweise fächerförmig auskragen, wobei der Befestigungsfußabschnitt (12i) vorzugsweise eine flache Kuchenstückform besitzt, und/oder
- unabhängig voneinander befestigt und/oder individuell austauschbar montiert sind,
- jeweils integral einstückig, materialhomogen ausgebildet sind und/oder aus einem elastischen, insbesondere gummielastischem, Material bestehen.

12. Landwirtschaftliche Erntemaschine nach einem der vorhergehenden Ansprüche, wobei zwei Stachel- und/oder Bürstenrotoren (12) koaxial zueinander und/oder parallel zueinander, voneinander beabstandet angeordnet sind und/oder jeweils um die genannte Umlaufachse (14) umlaufende Förderzinken und/oder -borsten (13) aufweisen.

13. Landwirtschaftliche Erntemaschine nach einem der vorhergehenden Ansprüche, wobei dem Stachel- und/oder Bürstenrotor (12) eine Einhausung zugeordnet ist, die an einer Oberseite des Stachel- und/oder Bürstenrotors (12) vollständig geschlossen ist.

14. Landwirtschaftliche Erntemaschine nach einem der vorhergehenden Ansprüche, wobei der Stachel- und/oder Bürstenrotor (12) in entgegengesetzten Umlaufrichtungen betreibbar und bezüglich beider entgegengesetzter Umlaufrichtungen identisch ausgebildet ist.

15. Landwirtschaftliche Erntemaschine nach einem der vorhergehenden Ansprüche, wobei der Stachel- und/oder Bürstenrotor (12) freilaufend rotatorisch drehbar ist und alleine vom Erntegut antreibbar ist.

16. Landwirtschaftliche Erntemaschine nach einem der Ansprüche 1 bis 14, wobei der Stachel- und/oder Bürstenrotor (12) durch einen fremdenergiebetätigten Rotorantrieb antreibbar ist, wobei der Rotorantrieb mit einer Fördergeschwindigkeit betreibbar ist, bei der die Förderzinken und/oder -borsten (13) eine vom Querförderer (3) abweichende, insbesondere im Vergleich dazu höhere, Fördergeschwindigkeit besitzen, wobei der Rotorantrieb vorzugsweise in seiner Fördergeschwindigkeit variabel einstellbar ausgebildet ist.
